# EUROPEAN PATENT APPLICATION

(11) **EP 3 182 481 A1**
(43) Date of publication of application: **21.06.2017**
(21) Application number: 16150410.5
(22) Date of filing: 07.01.2016
(51) Int. Cl.: H01M 2/02, H01M 10/052

(54) **POUCH BAG BATTERY CELLS**

(30) Priority: 17.12.2015 EP 15200757
(71) Applicant: 3M Innovative Properties Company, St. Paul, MN 55133-3427 (US)
(72) Inventor: Figgemeier, Egbert Franz, 42799 Leichlingen (DE); Schiller, Marion, 41352 Korschenbroich (DE)
(74) Representative: Müller, Bruno

(57) **Abstract**

Battery pouch cells including expandable sealants, such as those containing thermally expandable microspheres, are described. The pouch encloses the battery components, including the current collectors, which extend from the interior of the pouch, through an opening, to the exterior of the pouch. An expandable sealant is used to seal the openings surrounding the current collector tabs of the battery where they exit the pouch.

## Description

### FIELD

The present disclosure relates to pouch cell bags used for encapsulating components of batteries. In particular, the present disclosure relates to the use of expandable sealants in pouch cell bags. Pouch cell batteries incorporating such bags and methods of making them are also disclosed.

### SUMMARY

Briefly, in one aspect, the present disclosure provides a pouch cell battery comprising a battery and a pouch surrounding the battery. In some embodiments the battery comprises an anode in electrical contact with an anode current collector, a cathode in electrical contact with a cathode current collector, and an electrolyte disposed between the anode and the cathode. The pouch comprises packaging material having a first surface, a second surface, and an opening between the first surface and the second surface, wherein the anode current collector and the cathode current collector extend from the interior of the pouch, through the opening between the first surface and the second surface of the packaging material, to the exterior of the pouch. The pouch cell battery further comprises an expandable sealing material forming a first seal between a first region of the anode current collector and at least one of the first surface and the second surface of the packaging material, and a second seal between a first region of the cathode current collector and at least one of the first surface and the second surface of the packaging material; wherein the expandable sealing material is expanded and fills a gap bounded by the first surface of the packaging material, the second surface of the packaging material and an edge of at least one of the current collectors.

In some embodiments, the expandable sealing material comprises a first discrete segment extending over the first region of the anode current collector, and a second discrete segment extending over the first region of the cathode current collector. In some embodiments, the expandable sealing material comprises a first continuous strip extending over the first region of the anode current collector and the first region of the cathode current collector.

In some embodiments, the expandable sealing material further comprises a third discrete segment of expandable sealing material extending over a second region of the anode connector opposite the first region of the anode connector, and a fourth discrete segment of expandable sealing material extending over a second region of the cathode connector opposite the first region of the anode connector. In other embodiments, the expandable sealing material further comprises a second continuous strip of expandable sealing material extending over a second region of the anode current collector and a second region of the cathode current collector, wherein the second region of the anode collector is opposite the first region of the anode collector and the second region of the cathode connector is opposite the first region of the cathode connector.

In yet another embodiment, the expandable sealing material comprises a first segment extending around the anode current collector covering the first region of the anode current collector and a second region of the anode connector opposite the first region of the anode collector.

In any of these embodiments, the expandable sealing material may comprise a resin and thermally expandable microspheres. In some embodiments, the resin comprises an epoxy.

In any of these embodiments, the electrolyte may comprise a lithium salt dissolved in a liquid. In some embodiments, this liquid in impregnated in a porous polymer separator located between the anode and cathode.

In another aspect, the present disclosure provides a pouch assembly. In some embodiments, such pouch assemblies may be used to form any of the pouch cell batteries described herein.

In some embodiments, the pouch assembly comprises packaging material having a first surface and a second surface, and an opening between the first surface and the second surface, and an expandable sealing material adhered to at least one of the first surface and the second surface of the packaging material along at least a portion of the opening.

In any of these embodiments, the packaging material may comprise a first layer comprising a moisture impermeable layer bonded to a second layer comprising a non-conductive layer. In some embodiments, the first layer comprises a metal and the second layer comprises a polymeric film.

In another aspect, the present disclosure provides methods of a making a pouch cell battery, including any of the pouch cell batteries described herein.

In some embodiments, the method of making a pouch cell battery comprises positioning an anode, an anode current collector, a cathode, a cathode current collector and an electrolyte in working relation in the interior of a pouch cell assembly, where a portion of the anode current collector and a portion of the cathode current collector extend from the interior of the pouch, through the opening, to the exterior of the pouch; and applying heat to expand the expandable sealing material and fill a gap bounded by an edge of at least one of the current collectors, the first surface of the packaging material, and the second surface of the packaging material.

In some embodiments, the method further comprises sealing the opening, wherein sealing the opening comprises forming (i) a first bond between at least one of the first surface and the second surface of the packaging material and a region of the anode current collector passing through the opening; and (ii) a second bond between at least one of the first surface and the second surface of the packaging material and a region of the cathode current collector passing through the opening.

In any of these embodiments, sealing the opening may further comprise heat sealing a portion of the first surface of the packaging material to the second surface of the packaging material.

In any of these embodiments, the expandable sealing material may expand to cover at least a portion of at least one of the current collector tabs extending past the opening to the exterior of the pouch.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

**FIG. 1** illustrates a pouch cell battery of the prior art.
**FIG. 2** is a perspective view of an exemplary pouch cell battery according to some embodiments of the present disclosure.
**FIG. 3** is a cross-sectional view of the pouch cell battery of **FIG. 2****,** along line **A-A.**
**FIG. 4** is a cross-sectional view of the pouch cell battery of **FIG. 2****,** along line **B-B.**
**FIG. 5** is an enlarged view of region C of the pouch cell battery of **FIG. 4****.**
**FIG. 6** is a cross-sectional view of another exemplary pouch cell battery according to some embodiments of the present disclosure.
**FIG. 7** is a cross-sectional view of another exemplary pouch cell battery according to some embodiments of the present disclosure.

### DETAILED DESCRIPTION

Lithium ion batteries are used in a wide variety of applications. Such batteries include an electrolyte containing a dissociable lithium salt. The salt may be present in a solid polymeric electrolyte or in a liquid electrolyte. In one common construction, the electrolyte and other battery components are enclosed in a pouch cell. Pouch cell constructions are also useful for batteries based on other chemistries. While serving several functions, the pouch cell is intended to protect the battery components from exposure to water, including water vapor.

US 6,296,967 B1 describes enclosing a lithium battery in a first cover surrounded by a second rigid cover. WO2014077649(A) describes a swelling tape for filling a gap formed between the electrode assembly and the can of a battery. JP5432321B describes the use of expandable microspheres in the interior layer of a pouch cell purportedly providing a measure of safety in case of an explosion risk arising from the generation of heat and pressure in the battery cell.

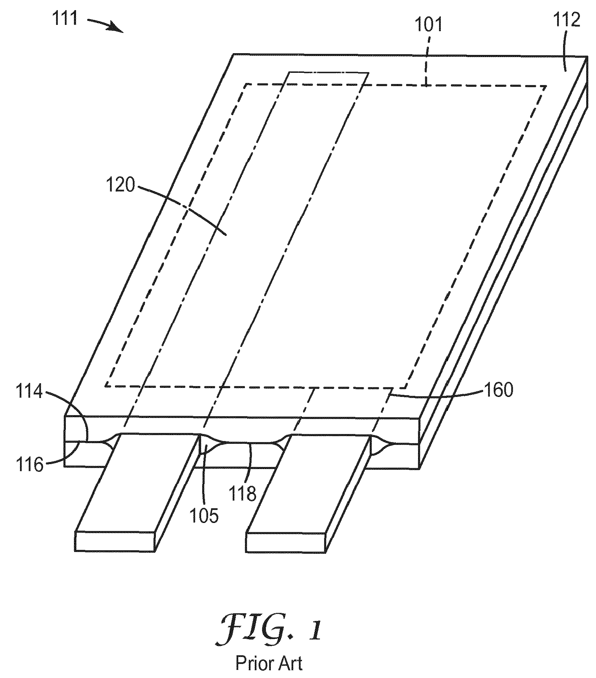

Pouch cell battery **111** of the prior art is illustrated in **FIG. 1****.** Pouch cell bag (also referred to as "pouch") **112** comprises a packaging material that surrounds battery components **101.** Anode current collector **120** and cathode current collector **160** extend from the interior to the exterior of the pouch. Materials for the pouch are selected in part to minimize or prevent the passage of moisture into the pouch.

Typically, the perimeter of the pouch is sealed to enclose the battery components. For example, surfaces **114** and **116** may be heat-sealed to each other forming seal **118.** The quality of the seal can be critical to preventing the passage of moisture into pouch as well as the leakage of electrolyte out of the pouch. Leakage problems can arise due to poor seal quality, particularly in the areas near the current collectors.

As shown, the conformability of pouch **112** around anode current collector **120** and cathode current collector **160** may be insufficient to seal the entire opening leading to gaps **105.** As shown, gap **105** is bounded by the edge of anode current collector **120** and the regions of first surface **114** and second surface **116** near this edge. In addition, the step change in thickness can lead to inconsistent pressure during the heat sealing operation. This can lead to incomplete sealing near the boundaries of the current collectors.

Attempts have been made to improve the sealing near the current collectors. For example, films or tapes have been wrapped around the collectors in the region near the seals. However, this approach adds extra steps to the process and can still result in gaps leading to moisture ingress.

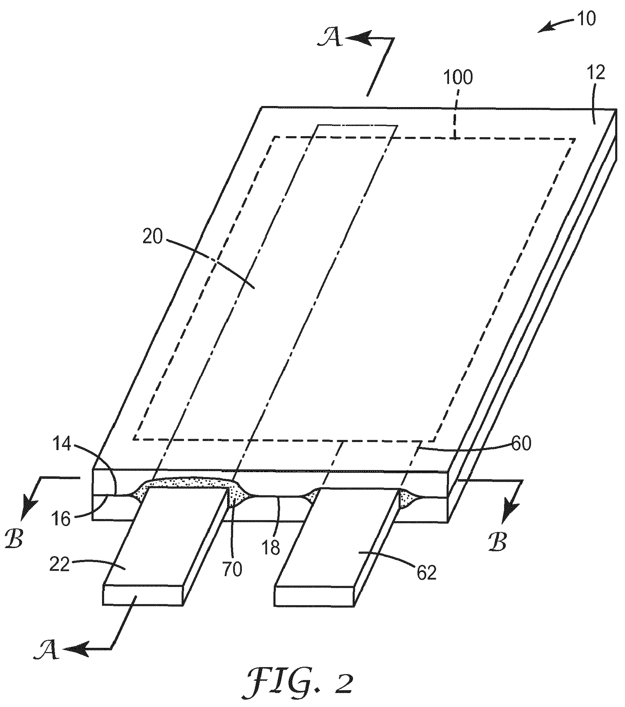

**Figure 2** is a perspective view of pouch cell battery **10** according to some embodiments of the present disclosure. Pouch cell bag (also referred to as "pouch") **12** comprises a packaging material that surrounds battery components **100.** Anode current collector **20** and cathode current collector **60** extend from the interior to the exterior of pouch **12.** The portion of the anode current collector extending outside of the pouch is referred to as anode tab **22.** Similarly, cathode tab **62** refers to the portion of the cathode current collector that extends outside of the pouch.

Generally, the construction of the packaging material is not limited and any known constructions are suitable for use in the present disclosure. Typically, the packaging material comprises at least two layers. At least one layer is selected to be moisture impermeable. Suitable materials for this first layer include metal foils, e.g., aluminum foil. Generally, the second layer is non-conducting and in the final construction will form the interior of the pouch relative to the first layer. The materials used for this layer should also be selected to be compatible with the contents of the pouch cell battery, especially the electrolyte. Suitable materials for the second layer include polymeric films. Suitable polymers include those that can be heat sealed to themselves, such as a polyolefins.

In some embodiments, the second layer is bonded directly to first layer. For example, a polymeric second layer may be vapor coated with a metal forming the first layer. In other embodiments, a polymeric second layer may be extruded onto or laminated to a first metal foil layer. In some embodiments an intermediate layer, e.g., an adhesive, may be interposed between the first and second layers of the packaging material.

In some embodiments, the packaging material may include additional layers. For example, in some embodiments, a water vapor impermeable layer (e.g., the metal layer) is positioned between two polymer layers. One or both polymer layers may be bonded, directly or indirectly to the water vapor impermeable layer. A common pouch material includes an interior layer comprising a polyolefin film, an intermediate layer comprising aluminum, and an exterior layer comprising a polyester film.

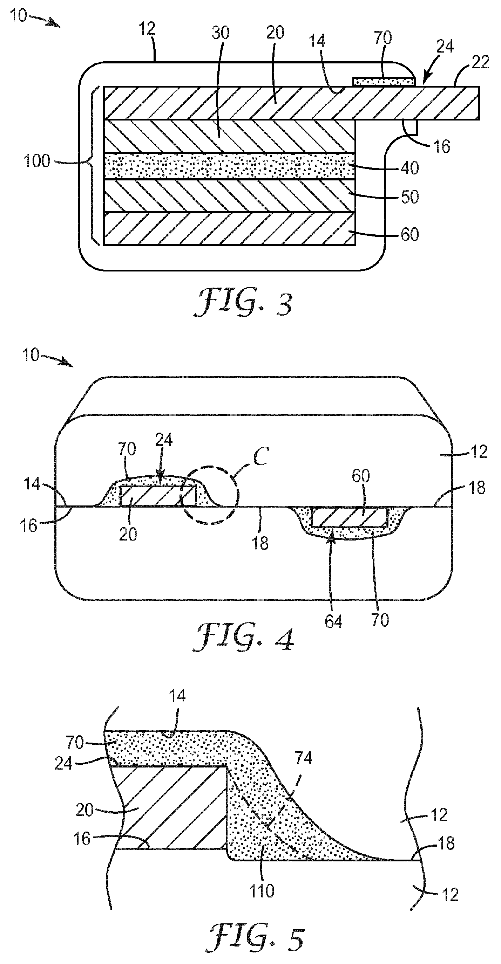

**Figure 3** is a cross-sectional view of pouch cell battery **10** taken along line **A-A** of **FIG. 2****.** Pouch **12** surrounds battery components **100.** In general the battery components may be any combination of components typically found in a pouch cell battery. For non-limiting illustrative purposes, the following exemplary battery components are described.

Anode **30** and cathode **50** are separated by electrolyte **40.** In some embodiments, the electrolyte comprises a lithium salt dissolved in a liquid. Typically, this liquid in impregnated in a porous polymer separator (not shown). Any known porous separator may be used, including those comprising one or more meshes or webs, such as those including woven and nonwoven fibers.

In some embodiments, multiple anodes, electrolytes, and cathodes may be included in various configurations in a single pouch cell. Anode current collector **20** is in electrical contact with anode **30.** Similarly, cathode current collector **60** is in electrical contact with cathode **50.** As illustrated in **FIG. 3****,** the anode and anode current collector are in direct contact, and the cathode and cathode current collector are in direct contact, which is often preferred. However, in some embodiments additional layers may be interposed between them, provided there is sufficient conductivity to maintain the desired level of electrical contact.

Anode current collector **20** extends from the interior to the exterior of pouch **12,** with anode tab **22** indicating the portion of the anode current collector that extends outside the pouch. Expandable sealant **70** extends over first region **24** of anode current collector **20.** When heat sealed, expandable sealant **70** expands and seals first surface **14** of pouch **12** to first region **24** of anode current collector **20.** (See **FIG. 2****.)**

**Figure 4** is a cross-sectional view of pouch cell batter **10** taken along line **B-B** of **FIG. 2****.** Anode current collector **20** and cathode current collector **60** extend from the interior to the exterior of pouch **12** (as shown in **FIG. 2****),** passing through an opening between first surface **14** and second surface **16** of pouch **12.** Expandable sealant **70** extends over and seals first surface **14** of pouch **12** to first region **24** of anode current collector **20.** As discussed below, in some embodiments, sealant may be present between the opposite side of the anode current collector and the pouch. However, as shown in **FIG. 4****,** in some embodiments, second surface **16** of pouch **12** may be bonded directly to anode current collector **20.** Similarly, expandable sealant **70** extends over and seals second surface **16** of pouch **12** to first region **64** of cathode current collector **60.** In some embodiments first surface **14** of pouch **12** is directly bonded to the opposite side of cathode current collector **60.**

As shown in **FIG. 4****,** expandable sealant **70** extends beyond the edges of the anode and cathode current collectors and forms part of the seal between first surface **14** and second surface **16** of pouch **12.** In some embodiments, heat seal **18** seals the remainder of the interface between the first and second surfaces of the pouch sealing the opening.

**Figure 5** is a close up view of area **C** of **FIG. 4****,** near the edge of anode current collector **20.** Anode current collector **20** is positioned between first surface **14** and second surface **16** of pouch **12.** Expandable sealant **70** seals first surface **14** to both first region **24** of the anode current collector and to a portion of second surface **16** near the edge of the current collector. Unexpanded boundary **74** of expandable sealant **70** would result in gap **110** where the sealant is not able to maintain a seal at the step change occurring at the edge of the anode current collector. However, when expanded, expandable sealant **70** fills gap **110,** sealing the opening around the anode current collector.

Generally, gap **110** is bounded by the edge of anode current collector **20** and the regions of the first surface **14** and second surface **16** of pouch **12** near this edge. For example, the regions of first surface **14** and second surface **16** between the edge of anode current collector **20** and the beginning of heat seal **18.** As illustrated in **FIG. 4****,** similar gaps can arise on both edges of anode current collector **20** and cathode current collector **60.**

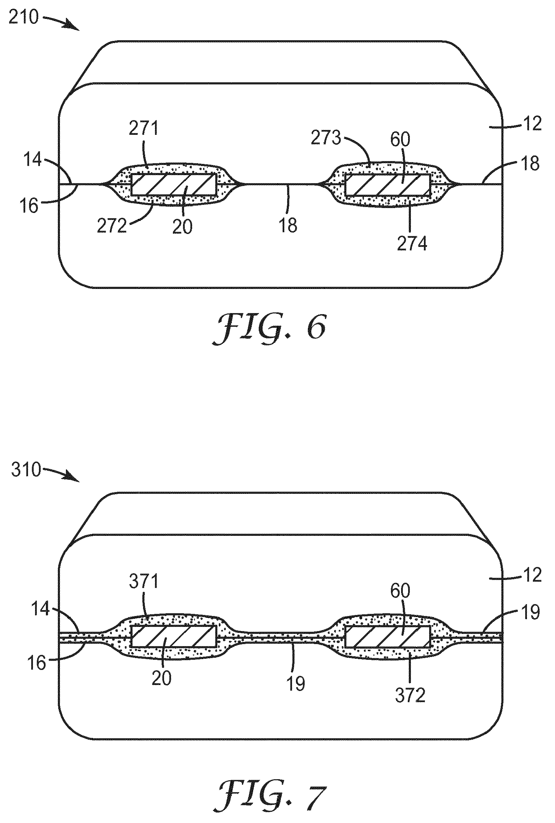

Pouch cell battery **10** described above includes separate, discrete segments of expandable sealant **70** extending over one side the anode and cathode current collectors. Alternative embodiments of the pouch cell batteries of the present disclosure are illustrated in **FIGS. 6** and **7****.** The view is similar to the cross-sectional view of **FIG. 4****.**

Pouch cell battery **210,** illustrated in **FIG. 6****,** includes two segments of expandable sealant associated with each current collector. First segment **271** and a second segment **272** of expandable sealant **270** are located on opposite sides of anode current collector **20.** Similarly, third segment **273** and fourth segment **274** of expandable sealant **270** are located on opposite sides of cathode current collector **60.**

As shown, upon heat sealing, the segments of expandable sealant expand, sealing surfaces **14** and **16** of pouch **12** to opposing sides of the current collectors. In addition, opposing segments **271** and **272** seal to each other near the edges of anode current collector **20.** Similarly, opposing segments **273** and **274** seal to each other near the edges of cathode current collector **60.** Heat seal **18** completes the seal between surfaces **14** and **16.** As a result, the expandable sealant fills the gaps between surfaces **14** and **16** that extend from the edges of the current collectors to the heat seals.

In some embodiments, a single segment of expandable sealant may be wrapped around the current collector so that this single segment seals both surfaces **14** and **16** to opposing surfaces of a current collector. Expansion of the seal would then fill any gaps between these surfaces between the edges of the current collectors and the start of heat seal.

In some embodiments the use of segments on both sides of the current collector, or a segment wrapping around the current collector may improve overall gap filling as compared to embodiments where the expandable sealant is only on one side of the current collector.

While the previous embodiments used discrete segments of expandable sealant, pouch cell battery **310** shown in **FIG. 7** includes two continuous strips of expandable sealant **371** and **372** extending over both anode current collector **20** and cathode current collector **60.** Upon heat sealing, the strips of sealant expand, bond to opposing surfaces of the current collectors, and fill the gaps between first surface **14** and second surface **16** of pouch **12** near the edges of the current collectors.

In some embodiments, the continuous strips of expandable sealant can extend the entire length of the opening between first surface **14** and second surface **16** of pouch **12.** As a result, seal **19** is formed by the expandable sealant bonding surfaces **14** and **16** to each other. In some embodiments, a heat seal or other form of seal may be used to seal the portions of the gap between the first and second surfaces extending beyond the length of the continuous strips of expandable sealant.

As shown in **FIG. 7****,** in some embodiments, the pouch cell battery may include two strips of expandable sealant with on each side of the current collectors. In some embodiments, a discrete segment of expandable sealant may be located on one side of one or both of the anode and cathode current collectors, opposite the continuous strip of expandable sealant. In some embodiments, only a single strip of expandable sealant may extend over the one side of both the anode and cathode current collectors.

In some embodiments, the use of at least one single continuous strip of expandable sealant may improve the overall seal quality and simplify the manufacturing process.

In use, such pouch cell assemblies may be used to create pouch cell batteries, including those exemplary embodiments discussed herein. Generally, any know technique may be used to position the battery components in the pouch cell assembly. In addition, known sealing methods may be used to seal the pouch. Such methods typically rely on the application of heat and pressure. The operating parameters may be selected based on the materials of the pouch and the expandable sealant.

Generally, the expandable sealant comprises a resin system and a heat-expandable component. The resin system is selected to bond to the interior opposing surfaces of the pouch to the current collectors. In some embodiments, the expandable sealant is non-tacky after the sealing operation. In some embodiments, the sealant is also non-tacky prior to sealing.

Suitable resin systems may include a crosslinkable polymer system and a thermally activated curative. Suitable polymer systems include those based on epoxy resins and their cocuratives. Generally, the resin system is selected to be compatible with the heat sealing operation. Therefore, the components and relative amounts are selected to achieve the desired cure at the time and temperatures produced during the heat sealing operation.

In some embodiments, the heat expandable component comprises thermally expandable microspheres. In some embodiments, such microspheres generally comprise a heat-softenable shell containing a gas. Upon exposure to a temperature above the softening point of the shell, the gas expands, expanding the softened shell. In other embodiments, the shell contains a low boiling point liquid. Upon exposure to a temperature above the softening point of the shell, the liquid vaporizes, expanding the softened shell. In either case, when the temperature is reduced, the shell hardens in its expanded configuration.

By appropriate selection of the type of expandable component, the microspheres will expand in the range of the heat sealing conditions (e.g., the time and temperature of sealing). The microspheres and sealing conditions should be selected to prevent overexpansion and destruction of the microspheres. In some embodiments, the microspheres will form a closed cell foam. Such a foam comprises discrete cells (the microspheres) surrounded by resin. In contrast, if the microspheres collapse, voids may be formed. If these voids are sufficiently interconnected, the result can be an open cell foam. Such a foam includes connected passages through the bulk of the foam. Such passages could contribute to unwanted ingress of moisture into the pouch cell battery.

Example. The use of an expandable sealant to seal the region around a current collector tab is illustrated in the following example. This example is merely representative of the results that can be obtained using the materials and processes described in the present disclosure.

A metal tab similar to materials used for current collector tabs (e.g., anode current collectors, and cathode current collectors) was inserted into a pouch cell bag. The pouch cell bag consisted of an interior layer of polyethylene (80 microns), an intermediate aluminum foil (40 microns), and an exterior polyester layer (25 - 30 microns). The metal tab was positioned such that the tab extended from the interior to the exterior of the pouch.

An expandable sealant was placed between the tab and the interior polyethylene layer of the pouch, covering both sides of the tab. This resulted in a structure similar to that shown in FIG. 6, but with only a single current collector tab. The expandable sealant was SAT-1010, available from 3M Company, St. Paul, Minnesota, USA. This structural adhesive tape is based on a DEGBA epoxy resin system including a core/shell rubber toughener, PK-HH phenoxy resin, a curative, and accelerator, and fillers. It also includes about 0.5% by weight (based on the total weight of the composition) thermally expandable microspheres.

The pouch was sealed, and the sealant was cured and thermally expanded at 170 degrees C for two minutes. The region around the metal tab was then visually inspected. The sealant had expanded, filling all gaps between the pouch and the tab. In addition, the sealant was firmly bonded to both the interior polyethylene layer of the pouch and the metal surface of the current collector tab.

The expandable sealant also expanded outward from the pouch opening covering a portion of the surface of the metal tab exterior of the pouch. In some embodiments, such expansion past the edge of the pouch may be advantageous. For example, it can be important to prevent any electrical contact between the current collector tabs and the foil layer of a pouch, as this can result in a short or other defect in the battery. It is possible that the foil layer may be exposed, or even extend slightly further than the inner polymer layer, thus creating a risk of contact with the current collector tabs. By having the expandable sealant extend out to the exterior of the pouch, the sealant will prevent contact between any exposed metal foil and the current collector tabs.

## Claims

1. A pouch cell battery **10** comprising:
a battery comprising:
an anode **30** in electrical contact with an anode current collector **20.**
a cathode **50** in electrical contact with a cathode current collector **60,** and
an electrolyte **40** disposed between the anode and the cathode;
a pouch **12** surrounding the battery, the pouch comprising:
packaging material having a first surface **14,** a second surface **16,** and an opening between the first surface and the second surface, wherein
the anode current collector and the cathode current collector extend from the interior of the pouch, through the opening between the first surface and the second surface of the packaging material, to the exterior of the pouch; and
an expandable sealing material **70** forming a first seal between a first region of the anode current collector and at least one of the first surface and the second surface of the packaging material, and a second seal between a first region of the cathode current collector and at least one of the first surface and the second surface of the packaging material; wherein
the expandable sealing material is expanded and fills a gap bounded by the first surface of the packaging material, the second surface of the packaging material and an edge of at least one of the current collectors.

2. The pouch cell battery of claim 1, wherein the expandable sealing material comprises a first discrete segment extending over the first region of the anode current collector, and a second discrete segment extending over the first region of the cathode current collector.

3. The pouch cell battery of claim 1, wherein the expandable sealing material comprises a first continuous strip extending over the first region of the anode current collector and the first region of the cathode current collector.

4. The pouch cell battery of claim 2 or 3, further comprising a third discrete segment of expandable sealing material extending over a second region of the anode connector opposite the first region of the anode connector, and a fourth discrete segment of expandable sealing material extending over a second region of the cathode connector opposite the first region of the anode connector.

5. The pouch cell battery of claim 2 or 3, further comprising a second continuous strip of expandable sealing material extending over a second region of the anode current collector and a second region of the cathode current collector, wherein the second region of the anode collector is opposite the first region of the anode collector and the second region of the cathode connector is opposite the first region of the cathode connector.

6. The pouch cell battery of claim 1, wherein the expandable sealing material comprises a first segment extending around the anode current collector covering the first region of the anode current collector and a second region of the anode connector opposite the first region of the anode collector.

7. The pouch cell battery according to any one of the preceding claims, wherein the expandable sealing material comprises a resin and thermally expandable microspheres.

8. The pouch cell battery according to claim 7, wherein the resin comprises an epoxy.

9. A pouch assembly comprising
a pouch 12 comprising packaging material having a first surface 14 and a second surface 16, and an opening between the first surface and the second surface, and
an expandable sealing material adhered to at least one of the first surface and the second surface of the packaging material along at least a portion of the opening.

10. The pouch assembly of claim 9, wherein the packaging material comprises a first layer comprising a moisture impermeable layer bonded to a second layer comprising a non-conductive layer.

11. The pouch assembly of claim 10, wherein the first layer comprises a metal and the second layer comprises a polymeric film.

12. A method of making a pouch cell battery comprising:
positioning an anode, an anode current collector, a cathode, a cathode current collector and an electrolyte in working relation in the interior of the pouch assembly according to anyone of claims 9 to 11, where a portion of the anode current collector and a portion of the cathode current collector extend from the interior of the pouch, through the opening, to the exterior of the pouch; and
applying heat to expand the expandable sealing material and fill a gap bounded by an edge of at least one of the current collectors, the first surface of the packaging material, and the second surface of the packaging material.

13. The method of claim 12, further comprising sealing the opening, wherein sealing the opening comprises forming (i) a first bond between at least one of the first surface and the second surface of the packaging material and a region of the anode current collector passing through the opening; and (ii) a second bond between at least one of the first surface and the second surface of the packaging material and a region of the cathode current collector passing through the opening.

14. The method of claim 13, wherein sealing the opening further comprises heat sealing a portion of the first surface of the packaging material to the second surface of the packaging material.

15. The method of any one of claims 12 to 14, wherein the expandable sealing material expands to cover at least a portion of at least one of the current collector tabs extending past the opening to the exterior of the pouch.
